# EUROPEAN PATENT SPECIFICATION

(11) **EP 3 438 993 B1**
(45) Date of publication and mention of the grant of the patent: **06.10.2021**
(21) Application number: 17306030.2
(22) Date of filing: 02.08.2017
(51) Int. Cl.: H01B 7/282, H01B 7/14, H01B 13/26, C22C 9/06, H01B 1/02, H01B 7/04

(54) **A DYNAMIC POWER CABLE**
DYNAMISCHES STROMKABEL
CÂBLE DE PUISSANCE DYNAMIQUE

(43) Date of publication of application: 06.02.2019
(73) Proprietor: Nexans, 92400 Courbevoie (FR)
(72) Inventor: JOHANSON, Audun, 0653 OSLO (NO)
(74) Representative: Ipsilon

(56) References cited:
- EP-A1- 2 706 539
- WO-A1-2014/206474
- US-A1- 2011 048 765
- US-A1- 2017 207 003
- Chakravarthy ET AL: "Study of welding parameters on mechanical and corrosion properties of cupro nickel alloys Cu Ni", , 18 February 2013 (2013-02-18), XP055672075, Retrieved from the Internet: URL:http://hdl.handle.net/10603/14124 [retrieved on 2020-02-27]
- P. Ferro ET AL: "Laser welding of copper-nickel alloys: a numerical and experimental analysis", SCIENCE AND TECHNOLOGY OF WELDING AND JOINING, vol. 10, no. 3, 1 June 2005 (2005-06-01), pages 299-310, XP055672077, GB ISSN: 1362-1718, DOI: 10.1179/174329305X40615

## Description

### Technical Field

The present invention relates to submarine dynamic power cables, in particular the invention relates to a dynamic power cable with a fatigue resistant water barrier layer and a method of manufacturing such a cable.

### Background Art

As the world's maritime infrastructure is developing, the use of submarine cables to deliver electric power below, above, in or across bodies of water is rapidly increasing. Such submarine power cables are slender structures and are commonly suspended between a floating unit located at the surface of a body of water, from where electric power is typically delivered to equipment on the seabed. The range of applications for submarine power cables is wide, comprising any sea based installation required to receive or transmit electricity such as oil and gas production installations to renewable energy production sites such as offshore wind farms. The submarine power cables are thus typically exposed to mechanical loads imposed during dynamic movements of the cable from wave motions and underwater currents. The desired lifetime of a submarine power cable is between 10-50 years, and all components in the cable should therefore sustain exposure to mechanical loads for long periods of time.

Submarine power cables are required to have a water barrier layer to keep the cable core dry. The water barrier layer should completely block convection or diffusion of water, as an ingress of moisture can ultimately lead to a failure of the cable. A conventional water barrier layer is typically manufactured by a continuous or discontinuous extrusion of a seamless tube, and often comprises lead or a lead alloy due to its extrudability and high ductility.

Whilst a lead water barrier layer may be flexible and easily manufactured, it also possesses low fatigue resistance, and is therefore not well suited to the mechanical loads imposed on a subsea dynamic power cable by the cyclic movement of wave motions and underwater currents. These loads will within a relatively short time cause a lead alloy water barrier layer to fatigue and crack, allowing moisture to penetrate into the cable core.

One known solution to this problem is to make the water barrier layer from a corrugated copper alloy, which provides it with higher fatigue resistance. A water barrier layer comprising a copper alloy cannot be made by extrusion, and must instead be welded from a metallic sheet comprising the alloy, to form a continuous water barrier layer around a cable core. However, the corrugation process is slow, poses a risk to the integrity of the water barrier layer and is very detrimental to the overall design of the submarine cable, as the diameter of the water barrier layer is drastically increased during corrugation. A corrugated water barrier layer therefore heavily increases the cost of manufacture and deployment of a submarine power cable.

One known solution to this problem is to use a copper nickel (CuNi) alloy. A water barrier layer comprising a CuNi alloy exhibits higher fatigue resistance from cyclical mechanical loads caused by wave motions and water currents, and may therefore require less corrugation. European patent application EP 2706539 A1 discloses the use of various alloys, including CuNi alloys, and a method of manufacturing a cable by welding a metallic sheet to form a continuous water barrier layer around a cable core.

Some CuNi alloys from the prior art are known to exhibit high levels of resistance to fatigue and exhibit relative ease of welding. The inventor, however, has found that the fatigue properties of the welded water barrier layer depends on the welding process, and that there are several significant drawbacks to the welding of a conventional CuNi alloy metallic sheet into a water barrier layer. An important disadvantage is that the metallic sheet may be susceptible to thermal expansion and geometrical distortion causing changes in microstructure and local changes in composition during welding. These changes can be detrimental to the water barrier layers fatigue properties.

Thus, it has been an objective to develop a method of manufacturing a dynamic power cable which minimizes changes to the microstructure of the water barrier layer during welding thereby providing improved fatigue properties, and a dynamic power cable manufactured by such a method comprising a water barrier layer, the water barrier layer being fatigue resistant and better suited to welding.

These objectives are achieved by the invention as set forth and characterized in the independent claims, while the dependent claims describe additional details and embodiments of the invention.

### Summary of the Invention

The method according to the invention combines modern welding techniques with a CuNi alloy in the water barrier layer to provide fast and consistent precision welding, providing a high quality welded water barrier layer being less susceptible to fatigue.

A dynamic power cable is manufactured with a water barrier layer comprising a CuNi alloy, thus achieving higher resistance to fatigue whilst also allowing for reduced thickness of the water barrier layer. Besides the material costs which will be saved for a thinner water barrier layer, the welding techniques may be performed faster and with higher precision thereby saving time and costs.

The present invention thus provides a method of manufacturing a dynamic power cable, where a metallic sheet comprising a CuNi alloy is made into a water barrier layer by autogenous welding. The autogenous welding is facilitated by the CuNi alloy, whose thermal properties make it especially beneficial under autogenous welding. These thermal properties include low thermal expansion and low thermal conductivity, meaning heat input is concentrated leading to less geometrical distortion and minimal changes in the microstructure of the weld, which provides the welded water barrier layer with good fatigue properties. These properties also allow for a decrease in the welding equipment's power requirements, meaning investments in heavy duty equipment can be minimized. As used herein the term "autogenous" should be understood such that the welding is performed without the addition of an extra material. In other aspects of the invention non-autogenous laser welding may also be performed on parts of the cable, where the extra "filler" material comprises minimum the same nickel content as the alloy in the metallic sheet.

In an aspect of the invention, the dynamic power cable is manufactured by providing at least one cable core comprising a central conductor, and an electrically insulating layer arranged concentrically outside the conductor. A metallic sheet comprising a CuNi alloy is then wrapped around the cable core, and the opposing edges of the sheet are welded together to form a continuous water barrier layer. The welding is performed by autogenous welding.

In one aspect of the invention, the welding is performed with autogenous laser beam welding as this method provides high process continuity, weld quality and weld integrity. Advantageously, a metallic sheet comprising a CuNi alloy with low reflectivity, thermal conductivity and susceptibility to thermal expansion may be used in conjunction with autogenous laser beam welding as these properties allow for faster welding with less powerful lasers thereby saving time and money.

In another aspect of the invention, the welding process is performed by autogenous electric resistance welding, which also draws similar benefits from the properties of CuNi alloys as laser beam welding.

According to an aspect, the water barrier layer comprises a copper alloy with a mass fraction (wt%) between 10 wt% to 50 wt% nickel, and 50 wt% to 90 wt% copper. For a higher wt% of nickel, such 40 wt% or 50 wt%, the CuNi alloy displays advantageous welding properties, such as decreased thermal conductivity, reduced reflectivity and decreased thermal expansion. However, nickel is relatively expensive, and a high wt% of nickel may increase the cost of the cable more than what is necessary to achieve the desirable welding properties and resistance to fatigue. In another aspect of the invention, the copper alloy may therefore comprise between 20 wt% to 30 wt% nickel, and between 70 wt% to 80 wt% copper, this interval provides a beneficial balance between the cost of nickel against the improved welding properties of the CuNi alloy the added nickel content contributes. In yet further aspects of the invention, the copper alloy may comprise between 22 wt% to 28 wt% nickel, and between 72 wt% to 78 wt% copper, the composition of copper and nickel in such an alloy is further optimized to bring forth the desired welding properties whilst keeping nickel costs down. In yet further aspects of the invention, the copper alloy may comprise between 23 wt% to 27 wt% nickel, and between 73 wt% to 77 wt% copper, as this composition gives the most desirable properties for welding and fatigue resistance, whilst keeping costs of nickel down.

In an aspect of the invention, the water barrier layer may have a thickness between 0.1 - 2 mm. Advantageously, a CuNi alloy optimized for improved welding and fatigue properties allows the thickness of the water barrier layer to be reduced to 0.1 mm, thereby decreasing the cost of a cable whilst increasing its flexibility. For certain cables, the thickness of the water barrier layer may be required to be up to 2 mm thick. In an aspect of the invention, the water barrier layer may have a thickness between 0.3 - 1.5 mm. In yet further aspects of the invention, to achieve an optimal balance with respect to welding, fatigue strength and costs, the water barrier layer may have a thickness between 0.4 - 0.7 mm.

After the metallic sheet has been welded to create a continuous water barrier layer around the cable core, it is subjected to a forming process to reduce the diameter of the water barrier layer ensuring a tight fit around the cable core. Various ways to carry out the forming process are further described below. Advantageously, the aspects of the CuNi alloy, welding technique and thickness presented herein greatly facilitate the forming process, which further contributes to reducing time, costs and providing a stronger and more fatigue resistant power cable.

In one aspect of the invention the forming process comprises rolling the water barrier layer and cable core in a longitudinal direction of the cable core through at least one die. In another aspect of the invention the forming process comprises rolling the water barrier layer and cable core in a longitudinal direction of the cable core across at least one roller wheel. After the forming process is completed at least one polymer layer may be extruded radially outside the water barrier layer.

The invention further relates to a dynamic power cable comprising at least one cable core comprising a central conductor, with an electrically insulating layer and a water barrier layer arranged concentrically outside the cable core. The dynamic power cable being manufactured in a method according to any of the abovementioned aspects. Advantageously, this provides a dynamic power cable with excellent fatigue resistance whilst drastically decreasing production costs and time.

The invention also relates to the use of autogenous welding for joining a metallic sheet, to form a continuous water barrier layer around a cable core in a dynamic power cable, the metallic sheet comprising a copper-nickel alloy. In different aspects of the invention, either autogenous laser beam welding, or resistance beam welding may be used.

### Brief Description of Drawings

The invention will be described in detail with reference to the attached drawings wherein:
Fig. 1 schematically illustrates an aspect of the invention, where an example of a dynamic power cable cross section is shown.
Fig. 2 schematically illustrates an aspect of the invention, where an example of a dynamic power cable cross section comprising three cable cores is shown.
Fig. 3 schematically illustrates an aspect of the invention, where the welding step of the manufacturing method is shown.
Fig. 4 schematically illustrates an aspect of the invention, where the step of forming the welded water barrier layer is shown.

### Detailed Description of the Invention

The inventive concept will now be described more fully hereinafter with reference to the accompanying drawings.

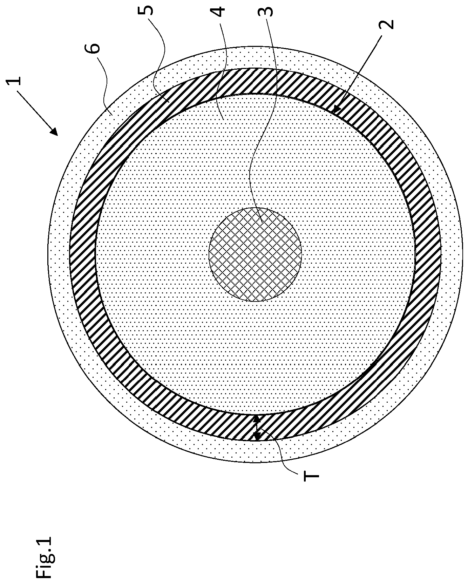

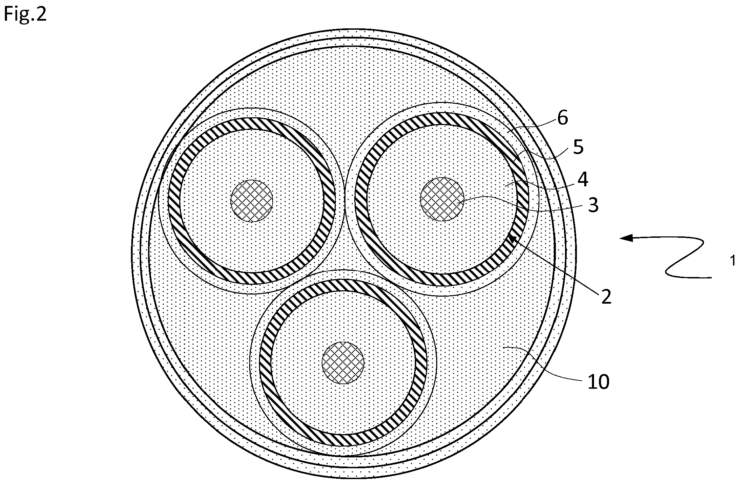

Fig. 1 schematically illustrates an example of a cross section of dynamic power cable 1, where the cable 1 is shown with one cable core 2. This invention is however not limited to a one-core cable, and the cable 1 may comprise two or any higher number of cores 2, as is deemed suitable for the cable's 1 purposes. Accordingly, Fig.2 illustrates an example of a dynamic power cable 1 cross section comprising three cable cores 2.

Each core 2 comprises an electrical conductor 3 arranged in the centre of the core 2, and an electrically insulating layer 4 arranged radially outside each conductor 3. Outside the first electrically insulating layer 4, though not illustrated in the figures, there may be arranged a layer of sealing material disposed between the electrically insulating layer 4 and a water barrier layer 5. This sealing material swells upon contact with water thereby working as an extra redundancy measure to prevent ingress of moisture in case of a crack or other failure in the water barrier layer 5.

It should be noted that the cable 1, and variations thereof, may comprise additional layers, or filling material 10 as exemplified in Fig. 2, arranged radially outside each conductor 3 or the at least one cable core 2, which will not described further herein. These layers and materials may be arranged inside, in-between or outside the already mentioned layers herein, and may comprise for example additional insulating, semiconducting, conducting, shielding and armouring layers as is well known in the art.

It should be noted that any percentage amount of a metal component in an alloy described herein is provided as a fraction of the weight of the metal per total weight of the alloy as a percentage, also known as mass fraction, percentage by mass, percentage by weight and abbreviated wt%.

The wt% of nickel in the copper is determined by how this wt% affects the fatigue resistance of the copper alloy, and especially how this affects the properties of the alloy which is important in the welding process. Table 1 displays some relevant properties of a conventional Electrolytic Tough Pitch Copper (ETP) and several different CuNi alloys which may be employed for the water barrier layer. The properties for the Copper ETP and the various alloys are shown in the columns according to the wt% of copper and nickel of the Copper ETP and the alloys. As can be seen, many of the desired properties with respect to welding increase as the wt% of nickel increases. Especially noteworthy is the fact that the laser welding speed is drastically increased. It should also be noted that the use of autogenous welding with a CuNi alloy also maintains a high level of weld quality which adds to the fatigue strength of the water barrier layer 5.

**Table 1:**

| | Copper ETP | CuNi alloys | | | | | |
|---|---|---|---|---|---|---|---|
| wt% Cu | ∼99.9% | ∼90% | ∼85% | ∼80% | ∼75% | ∼70% | ∼60% |
| wt% Ni | ∼0% | ∼10% | ∼15% | ∼20% | ∼25% | ∼30% | ∼40% |
| Thermal Conductivity at 20 °C [W/(m*K)] | ∼390 | ∼50 | ∼40 | ∼30 | ∼25 | ∼24 | ∼22 |
| Reflectivity | High | Minor | Minor | Minor | Minor | Minor | Minor |
| Mean Linear thermal expansion between 20- 300 °C [10⁻⁶/K] | ∼17 | ∼16 | ∼15.9 | ∼15.8 | ∼15.6 | ∼15.4 | ∼14.7 |
| Estimated laser welding speed for a 0.5 mm sheathing [m/s] | 2 | 4 | 6 | 7 | 9 | 10 | 10 |

It will be appreciated by the skilled person that, where a range of a percentage amount of a metal in an alloy is given, the amount of said metal in that alloy may vary within that range, provided that the total amount, i.e. total wt% of all metals in that alloy adds up to a total of 100 wt%. It will also be appreciated that some metals and alloys may inevitably have small quantities of impurities within them. Such impurities may include lead, manganese, iron, zinc, and other metals. These impurities may be present since they are typically too difficult and/or costly to remove when the metal or alloy is being produced. The amount of impurities are typically present in the range from 0.0001 wt%, to 1 wt%.

It should also be noted that minor amounts of iron, manganese, carbon and titanium may also be intentionally added as alloying elements. Any additional alloying elements may typically be present in the range from 0.01 wt% to 10 wt%. Table 2 provides some examples of different CuNi alloys, which may be used in the water barrier layer, with intentionally added alloying elements. Their specific compositions being given by in various standards.

**Table 2:**

| Alloy | Standard | Material - No. DIN/UNS |
|---|---|---|
| CuNi8 | - | 2.0807 |
| CuNi10 | DIN 17471 | 2.0811 C70700 |
| CuNi20 | BS 2870 | 2.0822 C71000 |
| CuNi30 | ASTM B122 | - |
| CuNi30Mn1FeTi | - | 2.0882 |
| CuNi10Fe1Mn | EN 1652 | 2.0872 C70600 |
| CuNi30Mn1Fe | EN 1652 | 2.0882 C71500 |
| CuNi30Fe2Mn2 | DIN 17664 | 2.0883 |
| CuNi44Mn1 | DIN 17664 | 2.842 4401 |

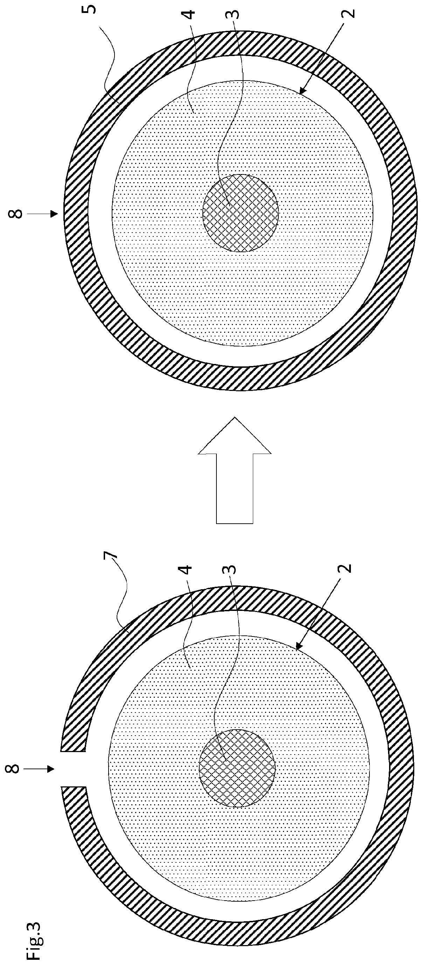

Fig. 3 schematically illustrates part of the manufacturing process of a cable 1. The metallic sheet 7 is shown wrapped around the cable core 2, and the welding process 8 is represented by an arrow 8 on Fig. 3 where the welding together of the opposing edges of the sheet 7 takes place to form the continuous water barrier layer 5. It will therefore be apparent that the water barrier layer 5 in this example is made up of the metallic sheet 7, welded together along the opposing longitudinal edges of the metallic sheet 7 as it is wrapped around the cable core 2. It will be appreciated that the pre-weld metallic sheet 7 is illustrated to the left on Fig. 3, and that the post-weld water barrier layer 5 is on the right of Fig. 3.

Though the example in Fig. 3 shows a gap between the opposing longitudinal edges of the metallic sheet, this is merely for illustrative purposes and the edges may be abutting, overlapping or arranged in whichever suitable manner, which will be apparent to the person skilled in the art.

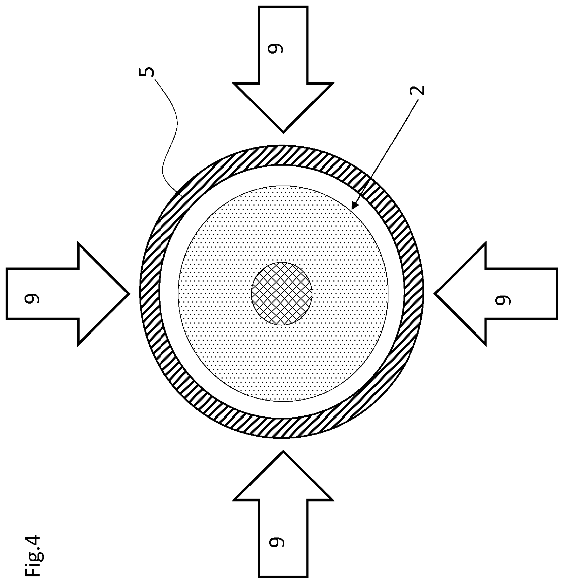

For the sake of clarity, it should be mentioned that in Fig. 3 and Fig. 4, the metallic sheet 7 is shown with a larger inner diameter than the outer diameter of the cable core 2. The gap between the metallic sheet 7 and the cable core 2 being exaggerated in Fig. 3 and Fig. 4 for illustrative purposes. In finished cable 1, as illustrated in Fig. 1 and Fig. 2, the water barrier layer 5 will fit tightly on the cable core 2 or the layer or layers arranged on the cable core 2.

The welding process 8 is preferably performed by autogenous welding, as this welding technique delivers high process continuity, weld quality and weld integrity. A water barrier layer 5 comprising CuNi alloy is especially advantageous as the added nickel improves laser welding properties by decreasing thermal conductivity to concentrate heat allowing for increased throughput and/or decreased power requirements of the welding equipment. A decrease in the thermal conductivity limits the heat affected zone which again limits detrimental geometrical distortion and change in microstructure and composition. Geometrical distortion, changes in microstructure and local changes in composition are detrimental for the fatigue properties of the water barrier layer 5. Increased wt% of nickel furthermore decreases thermal expansion to limit geometrical distortion. However, other considerations such as the thickness of the water barrier layer, the cost of nickel and the desired fatigue resistance of the water barrier layer are also considered.

In one aspect of the invention, the welding process 8 is performed by autogenous laser beam welding. An autogenous laser beam welding process additionally benefits from being used in conjunction with a CuNi alloy as the additional nickel decreases laser reflectivity to increase heat absorption and allocate for increased throughput and/or decreased laser power requirement.

In another aspect of the invention, the welding process 8 is performed by electric resistance welding, which also draws similar benefits from the properties of CuNi alloys as laser beam welding. Electric resistance welding is also preferably performed autogenously, and this method also benefits from CuNi alloys with low reflectivity, thermal conductivity and susceptibility to thermal expansion.

In other aspects of the invention, it is conceivable that several different kinds of autogenous welding techniques are used on one cable. Other autogenous welding techniques may comprise autogenous tungsten inert gas welding (TIG) or friction stir welding (FSW). Non-autogenous welding may also be performed on parts of a cable 1, where the filler material comprises minimum the same nickel content as the alloy in the metallic such as tungsten inert gas welding (TIG), metal inert gas welding (MIG) or manual metal arc welding (MMA). Other welding techniques known which the person skilled in the art will be familiar with may also be used. The thickness of the cable, the composition of the CuNi alloy will vary accordingly.

In a non-limiting example, the metallic sheet 7 may comprise a copper alloy, comprising 25 wt% nickel with 0.5 mm thickness being welded by autogenous laser beam welding to a water barrier layer. In this example, the invention provides an optimal balance between a relatively low amount of nickel, and a thin water barrier layer, thus saving material required for the cable whilst providing properties that are especially beneficial to the welding and forming process and maintaining high resistance to fatigue. It should be noted, however, that for certain cable applications, these parameters may vary, and there may therefore be other equally beneficial combinations of thickness, welding technique and composition of the alloy used in the water barrier layer 5 which will be apparent to the person skilled in the art based on the disclosure of the invention herein.

Fig. 4 schematically illustrates the forming process 9, which occurs after the metallic sheet 7 has been welded to form a continuous water barrier layer 5. As is illustrated in Fig. 4, the water barrier layer 5 may have a diameter which is larger than the outside diameter of the cable core 2. The forming process 9 is therefore performed to ensure that the water barrier layer 5 tightly fits the cable core 2, by applying pressure on the outside of the water barrier layer 5, illustrated by arrows 9 acting on the water barrier layer 5.

In one aspect of the invention, the forming process 9 comprises moving the water barrier layer 5 and the cable core 2, through at least one die in the longitudinal direction of the cable core 2.

In a further aspect of the invention, there may be a plurality of dies, with a decreasing cross sectional diameter which the water barrier layer 5 and the cable core 2 are moved through.

In another aspect of the invention, the forming process 9 comprises rolling the water barrier layer 5 and cable core 2 in a longitudinal direction of the cable core 2 across at least one roller wheel. In further aspects there may be a plurality of roller wheels, with varying shapes and sizes or applying an increasing amount of pressure which the water barrier layer 5 and the cable core 2 are rolled across. These aspects of the forming process 9 will be apparent to the person skilled in the art, and are therefore not illustrated in detail in the figures.

Once the forming process 9 is completed a polymer layer 6 may be extruded radially outside the water barrier layer 5. This process is not detailed further herein since this is a well-known process in the art will be apparent to the person skilled in the art. In other aspects of the invention, one cable core 2 may be put together with several other cable cores, as is illustrated in Fig. 2.

It should be understood that within the scope of the claims, yet further variations and combinations of CuNi alloys than those disclosed above can be designed for a certain welding technique and water barrier layer thickness, as will be obvious to the person skilled in the art based upon the disclosure of the invention herein.

## Claims

1. A method of manufacturing a dynamic power cable (1) comprising the steps of;
- providing a cable core (2) comprising; an electrical conductor (3) and an electrically insulating layer (4) arranged radially outside of the electrical conductor (3),
- wrapping a metallic sheet (7) radially around the cable core (2), the metallic sheet (7) comprising a copper-nickel alloy,
- welding (8) together opposing edges of the metallic sheet (7) to form a continuous water barrier layer (5) around the cable core (2),
**characterized in that**
- the welding (8) is performed by autogenous welding.

2. The method according to claim 1, wherein the welding (8) is performed by autogenous laser beam welding.

3. The method according to claim 1, wherein the welding (8) is performed by autogenous electric resistance welding.

4. The method according to any of the claims 1-3, wherein the metallic sheet (7) comprises a copper-nickel alloy comprising:
- between 10 wt% to 50 wt% nickel, and
- between 50 wt% to 90 wt% copper.

5. The method according to any of the claims 1-4, wherein the metallic sheet (7) comprises a copper-nickel alloy comprising:
- between 20 wt% to 30 wt% nickel, and
- between 70 wt% to 80 wt% copper.

6. The method according to any of the claims 1-5, wherein the metallic sheet (7) comprises a copper-nickel alloy comprising:
- between 22 wt% to 28 wt% nickel, and
- between 72 wt% to 78 wt% copper.

7. The method according to any of the claims 1-6, wherein the metallic sheet (7) comprises a copper-nickel alloy comprising:
- between 23 wt% to 27 wt% nickel, and
- between 73 wt% to 77 wt% copper.

8. The method according to any of the preceding claims, wherein the metallic sheet (7) has a thickness (T) between 0.1 - 2 mm.

9. The method according to claim 8, wherein the metallic sheet (7) has a thickness (T) between 0.3 - 1.5 mm.

10. The method according to claim 9, wherein the metallic sheet (7) has a thickness (T) between 0.4 - 0.7 mm.

11. The method according to any of the preceding claims, wherein the welded water barrier layer (5) is subjected to a forming process (9), whereby the diameter of the water barrier layer (5) is reduced so that the water barrier layer (5) fits tightly on the cable core (2).

12. A dynamic power cable (1) comprising:
- at least one cable core (2) comprising an electrical conductor (3) and an electrically insulating layer (4) that are arranged radially outside of the electrical conductor (3),
- a water barrier layer (5) that is arranged radially outside of the cable core (2), **characterized in that** the dynamic power cable (1) is manufactured according to the method of any one of the preceding claims.

13. Use of autogenous welding for joining a metallic sheet (7), to form a continuous water barrier layer (5) around a cable core (2) in a dynamic power cable (1), the metallic sheet (7) comprising a copper-nickel alloy.

14. Use of autogenous laser beam welding for joining a metallic sheet, according to claim 13.

15. Use of electric resistance welding for joining a metallic sheet, according to claim 13.

## Patentansprüche

1. Verfahren zur Herstellung eines dynamischen Stromkabels (1), umfassend die folgenden Schritte:
- Bereitstellen einer Kabelseele (2), die umfasst: einen elektrischen Leiter (3) und eine elektrisch isolierende Schicht (4), die radial außerhalb des elektrischen Leiters (3) angeordnet ist,
- Wickeln eines Metallblechs (7) radial um die Kabelseele (2), wobei das Metallblech (7) eine Kupfer-Nickel-Legierung umfasst,
- Zusammenschweißen (8) von gegenüberliegenden Kanten des Metallblechs (7), um eine durchgehende Wassersperrschicht (5) um die Kabelseele zu bilden (2),
**dadurch gekennzeichnet, dass**
- das Schweißen (8) durch autogenes Schweißen erfolgt.

2. Verfahren nach Anspruch 1, wobei das Schweißen (8) durch autogenes Laserstrahlschweißen erfolgt.

3. Verfahren nach Anspruch 1, wobei das Schweißen (8) durch autogenes elektrisches Widerstandsschweißen erfolgt.

4. Verfahren nach Die der Ansprüche 1 bis 3, wobei das Metallblech (7) eine Kupfer-Nickel-Legierung umfasst, die umfasst:
- zwischen 10 Gew% und 50 Gew% Nickel und
- zwischen 50 Gew% und 90 Gew% Kupfer.

5. Verfahren nach einem der Ansprüche 1 bis 4, wobei das Metallblech (7) eine Kupfer-Nickel-Legierung umfasst, die umfasst:
- zwischen 20 Gew% und 30 Gew% Nickel und
- zwischen 70 Gew% und 80 Gew% Kupfer.

6. Verfahren nach einem der Ansprüche 1 bis 5, wobei das Metallblech (7) eine Kupfer-Nickel-Legierung umfasst, die umfasst:
- zwischen 22 Gew% und 28 Gew% Nickel und
- zwischen 72 Gew% und 78 Gew% Kupfer.

7. Verfahren nach einem der Ansprüche 1 bis 6, wobei das Metallblech (7) eine Kupfer-Nickel-Legierung umfasst, die umfasst:
- zwischen 23 Gew% und 27 Gew% Nickel und
- zwischen 73 Gew% und 77 Gew% Kupfer.

8. Verfahren nach einem der vorhergehenden Ansprüche, wobei das Metallblech (7) eine Dicke (T) von 0,1 bis 2 mm aufweist.

9. Verfahren nach Anspruch 8, wobei das Metallblech (7) eine Dicke (T) von 0,3 bis 1,5 mm aufweist.

10. Verfahren nach Anspruch 9, wobei das Metallblech (7) eine Dicke (T) von 0,4 bis 0,7 mm aufweist.

11. Verfahren nach einem der vorhergehenden Ansprüche, wobei die geschweißte Wassersperrschicht (5) einem Formprozess (9) unterzogen wird, wodurch der Durchmesser der Wassersperrschicht (5) reduziert wird, so dass die Wassersperrschicht (5) eng an der Kabelseele (2) anliegt.

12. Dynamisches Stromkabel (1), umfassend:
- mindestens eine Kabelseele (2), die einen elektrischen Leiter (3) und eine elektrisch isolierende Schicht (4) umfasst, die radial außerhalb des elektrischen Leiters (3) angeordnet ist,
- eine Wassersperrschicht (5), die radial außerhalb der Kabelseele (2) angeordnet ist,
**dadurch gekennzeichnet, dass** das dynamische Stromkabel (1) gemäß dem Verfahren nach einem der vorhergehenden Ansprüche hergestellt ist.

13. Verwendung von autogenem Schweißen zum Verbinden eines Metallblechs (7), um eine durchgehende Wassersperrschicht (5) um eine Kabelseele (2) in einem dynamischen Stromkabel (1) zu bilden, wobei das Metallblech (7) eine Kupfer-Nickel-Legierung umfasst.

14. Verwendung von autogenem Laserstrahlschweißen zum Verbinden eines Metallblechs nach Anspruch 13.

15. Verwendung von elektrischem Widerstandsschweißen zum Verbinden eines Metallblechs nach Anspruch 13.

## Revendications

1. Procédé de fabrication d'un câble de puissance dynamique (1) comprenant les étapes de :
- fourniture d'une âme de câble (2) comprenant : un conducteur électrique (3) et une couche électriquement isolante (4) agencée radialement à l'extérieur du conducteur électrique (3),
- l'enroulement d'une feuille métallique (7) radialement autour de l'âme de câble (2), la feuille métallique (7) comprenant un alliage de cuivre et de nickel,
- le soudage (8) l'un à l'autre de bords opposés de la feuille métallique (7) pour former une couche de barrière à l'eau continue (5) autour de l'âme de câble (2),
**caractérisé en ce que**
- le soudage (8) est réalisé par soudage autogène.

2. Procédé selon la revendication 1, dans lequel le soudage (8) est réalisé par soudage autogène par faisceau laser.

3. Procédé selon la revendication 1, dans lequel le soudage (8) est réalisé par soudage autogène par résistance électrique.

4. Procédé selon l'une quelconque des revendications 1 à 3, dans lequel la feuille métallique (7) comprend un alliage de cuivre et de nickel comprenant :
- entre 10 % en poids et 50 % en poids de nickel, et
- entre 50 % en poids à 90 % en poids de cuivre.

5. Procédé selon l'une quelconque des revendications 1 à 4, dans lequel la feuille métallique (7) comprend un alliage de cuivre et de nickel comprenant :
- entre 20 % en poids et 30 % en poids de nickel, et
- entre 70 % en poids et 80 % en poids de cuivre.

6. Procédé selon l'une quelconque des revendications 1 à 5, dans lequel la feuille métallique (7) comprend un alliage de cuivre et de nickel comprenant :
- entre 22 % en poids et 28 % en poids de nickel, et
- entre 72 % en poids et 78 % en poids de cuivre.

7. Procédé selon l'une quelconque des revendications 1 à 6, dans lequel la feuille métallique (7) comprend un alliage de cuivre et de nickel comprenant :
- entre 23 % en poids et 27 % en poids de nickel, et
- entre 73 % en poids et 77 % en poids de cuivre.

8. Procédé selon l'une quelconque des revendications précédentes, dans lequel la feuille métallique (7) a une épaisseur (T) entre 0,1 et 2 mm.

9. Procédé selon la revendication 8, dans lequel la feuille métallique (7) a une épaisseur (T) entre 0,3 et 1,5 mm.

10. Procédé selon la revendication 9, dans lequel la feuille métallique (7) a une épaisseur (T) entre 0,4 et 0,7 mm.

11. Procédé selon l'une quelconque des revendications précédentes, dans lequel la couche de barrière à l'eau (5) soudée est soumise à un processus de formage (9), moyennant quoi le diamètre de la couche barrière à l'eau (5) est réduit de telle sorte que la couche barrière à l'eau (5) s'adapte étroitement sur l'âme de câble (2).

12. Câble de puissance dynamique (1) comprenant :
- au moins une âme de câble (2) comprenant un conducteur électrique (3) et une couche électriquement isolante (4) qui sont agencés radialement à l'extérieur du conducteur électrique (3),
- une couche de barrière à l'eau (5) qui est agencée radialement à l'extérieur de l'âme de câble (2),
**caractérisé en ce que** le câble de puissance dynamique (1) est fabriqué selon le procédé selon l'une quelconque des revendications précédentes.

13. Utilisation de soudage autogène pour l'assemblage d'une feuille métallique (7), pour former une couche de barrière à l'eau continue (5) autour d'une âme de câble (2) dans un câble de puissance dynamique (1), la feuille métallique (7) comprenant un alliage de cuivre et de nickel.

14. Utilisation de soudage autogène par faisceau laser pour l'assemblage d'une feuille métallique, selon la revendication 13.

15. Utilisation de soudage par résistance électrique pour l'assemblage d'une feuille métallique, selon la revendication 13.
